# EUROPEAN PATENT APPLICATION

(11) **EP 2 641 821 A1**
(43) Date of publication of application: **25.09.2013**
(21) Application number: 12160925.9
(22) Date of filing: 23.03.2012
(51) Int. Cl.: B62M 3/04, B62M 3/06

(54) **Crank mechanism**

(71) Applicant: Chen, Shang-Wan, New Taipei City 24159 (TW)
(72) Inventor: Chen, Chun Chieh, Cambridge CB1 1AH (GB)
(74) Representative: Horak, Michael

(57) **Abstract**

It is a kind of crank mechanism that consists of a crank (10) and a link (20). There are two key parts: one is a crank (10), it is to do a revolving motion; another is a link (20), it is to draw the crank (10). The purpose is to change the route of motion.

## Description

### BACKGROUND TO THE INVENTION

The traditional crank takes the form of a single bar, with a hole at either extremity. A pair of traditional cranks is to be a set, they are symmetrical. A hole is combined with the connecting shaft of the pedal, and another hole is combined with the bottom bracket shaft. When pedaling force is applied to the pedal, the connecting shaft of the centre point is to do circular motion. Therefore the route of the pedal is a circular track.

The crank mechanism is able to convert circular motion into reciprocation motion and it consists of a crank and a link. A pair of crank mechanisms is to be a set, they are symmetrical. When pedaling force is applied to the pedal, the pedal pulls the link, the link drives the crank in a circular motion. The track of the centre point of the connecting shaft of the pedal is going to a long ellipse; that is, to something approaching a linear track, it is a kind of reciprocation motion. The purpose of the invention is to shorten the track of the pedaling motion.

### SUMMARY OF THE INVENTION

The crank mechanism consists of a crank and a link, each end of the crank and the link has a hole, they are combined with the joint shaft. A pair of crank mechanisms is to be a set, they are symmetrical. When pedaling force is applied to the pedal, the pedal pulls the link, the link drives the crank to do circular motion. The track of the centre point of the connecting shaft of the pedal is going to a long ellipse; that is, to something approaching a linear track, it is a kind of reciprocation motion. An essential consideration in this aim is the distance between the two holes at each end of the crank is always less than that between the two holes at each end of the link.

The features are shown below:
1. Each end of the crank has a hole to combine respectively with the bottom bracket shaft and the joint shaft.
2. Each end of the link has a hole to combine respectively with the joint shaft and the pedal shaft.
3. The distance between the two holes at each end of the crank is always less than that between the two holes at each end of the link.
4. A pair of crank mechanisms can function in any conveyance designed to be operated by foot levers or pedal power.

### BRIEF DESCRIPTION OF THE DRAWINGS

FIG 1 is the structure of the crank mechanism view.
FIG 2 is the structure of the crank view.
FIG 3. is the structure of the link view.
FIG 4. is an exploded view of the crank mechanism.
FIG 5. is an assembled view of the crank mechanism.

### DETAILED DESCRIPTION OF THE INVENTION

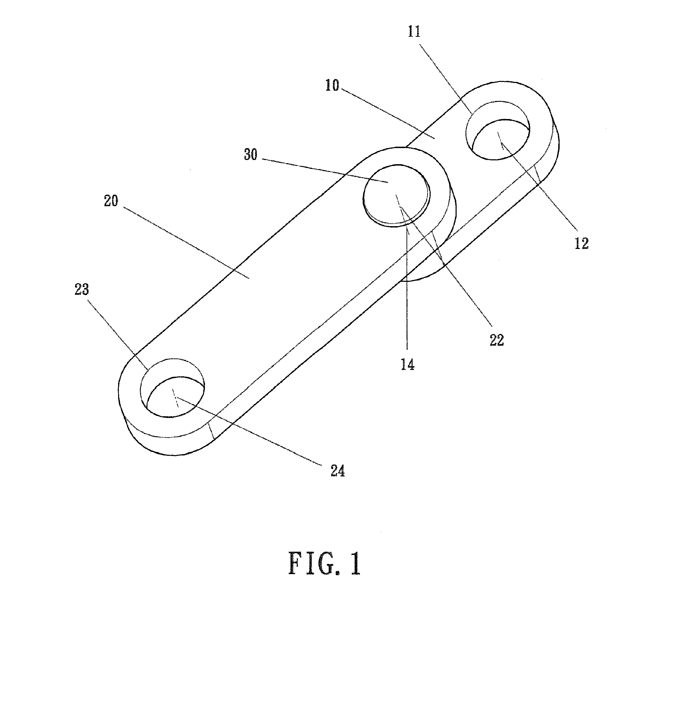

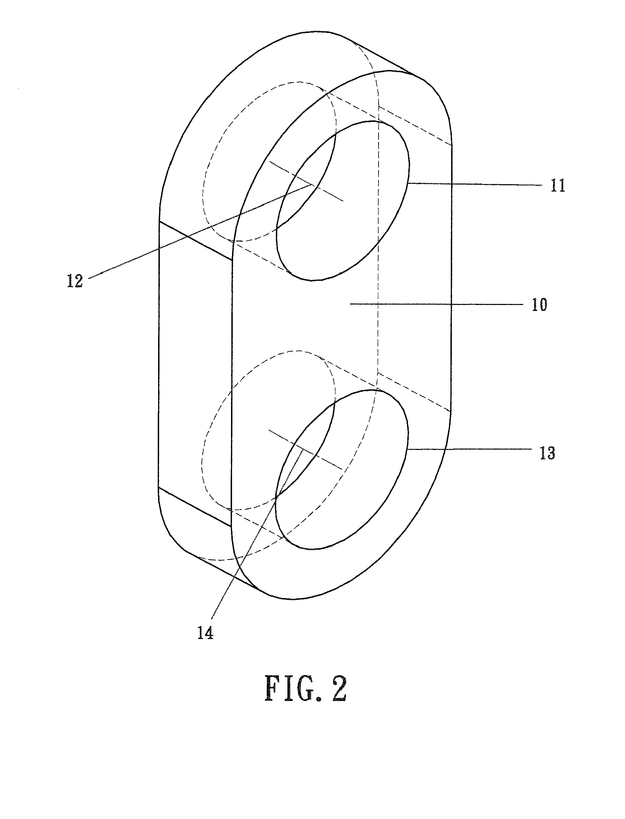

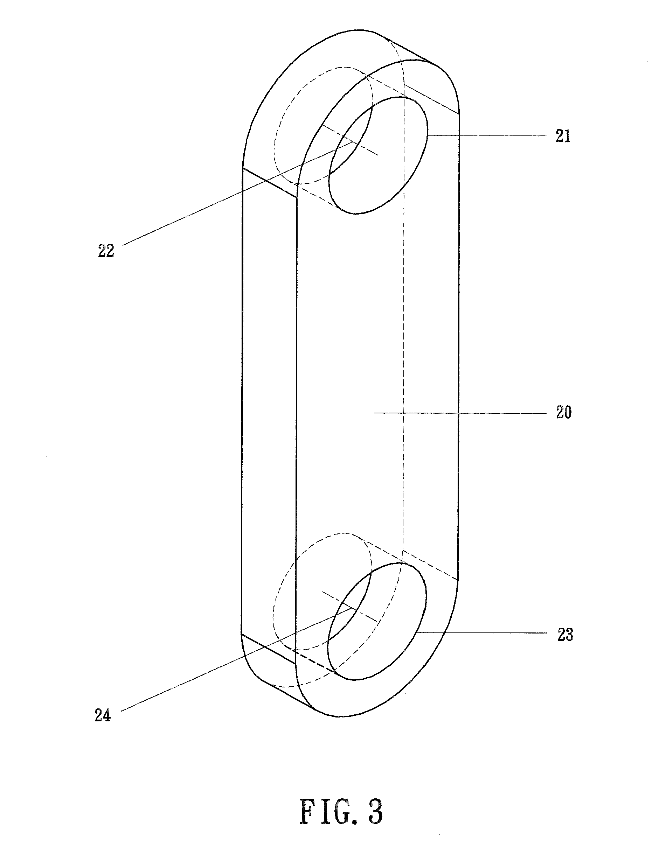

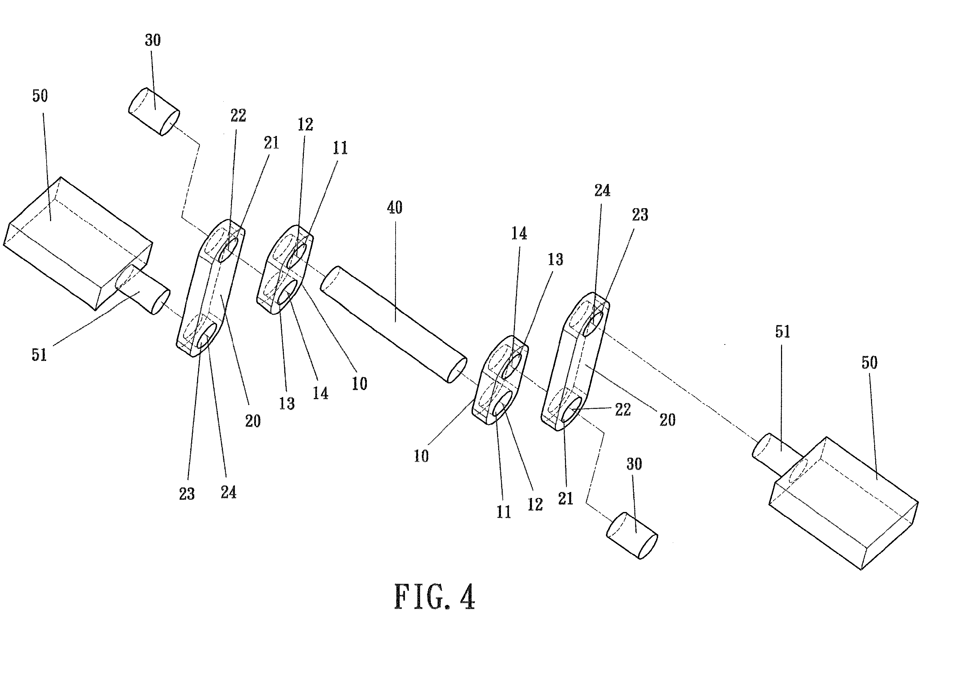

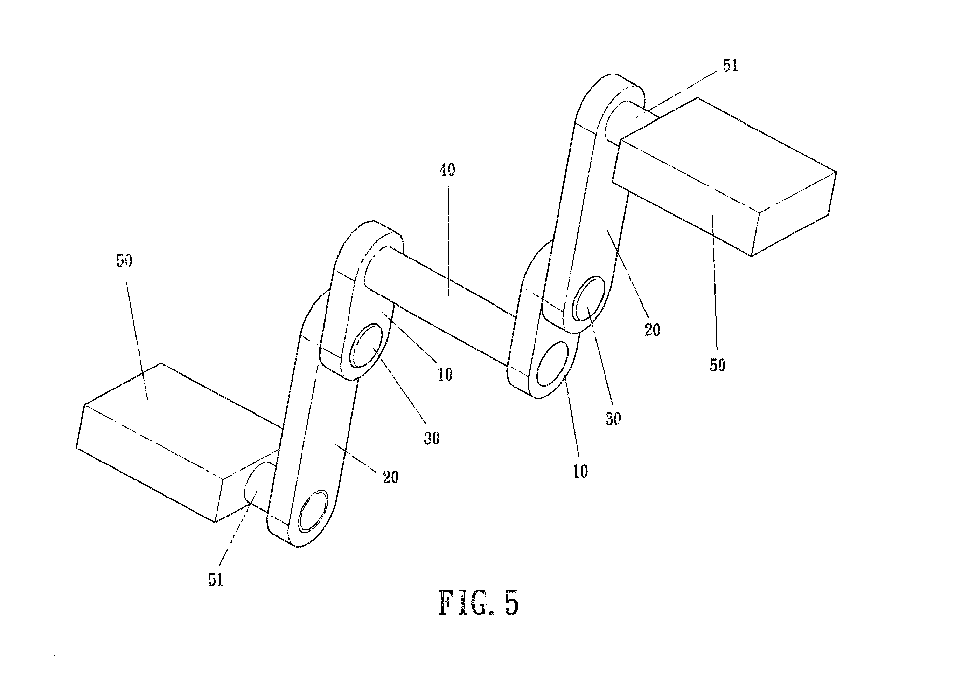

The paragraphs A - E that follow refer to figs. 1, 2, 3, 4 and 5 below, showing the crank mechanism assembly and its parts, and the annotations therewith. A. describes the structure of the crank mechanism. B. describes the structure of the crank (10). C. describes the structure of the link (20). D. is a series of instructions for the assembly procedure. E. is the description of use.
A. (See fig. 1): the structure of the crank mechanism is composed of the crank (10), the link (20), which combine with the joint shaft (30).
B. (See fig.2): the form of the crank (10) is a bar. The crank has two ends and each end has a hole; one is the first hole (11), another is the second hole (13). Two holes have two centre lines; one is the first centre line (12), another is the second centre line (14).
C. (See fig.3): the form of the link (20) is a bar. The link has two ends and each end has a hole; one is the third hole (21), another is the fourth hole (23). Two holes have two centre lines; one is the third centre line (22), another is the fourth centre line (24).
D. (See figs 4 & 5): a pair of crank mechanisms is to be a set, they are symmetrical. The joint shaft (30) combines with the second hole (13) of the crank (10) and the third hole (21) of the link (20). The bottom bracket shaft (40) combines with the first hole (11) of the crank 10. The fourth hole (23) of the link (20) combines with the connecting shaft (51) of the pedal (50).
E. (See fig. 5): a pair of crank mechanisms is to be a set, they are symmetrical. The bottom bracket shaft (40) is a marketed part, it combines with the left and right crank mechanisms. The left and right pedals are marketed parts; the left pedal combines with the left crank mechanism, the right pedal combines with the right crank mechanism. A pair of crank mechanisms can function in any conveyance designed to be operated by foot levers or pedal power.

## Claims

1. A crank mechanism, it for use in conveyances operated by foot levers or pedals, the structure of the crank mechanism is composed of a bar of crank (10) and a bar of link (20), the crank (10) has the first hole (11) and the second hole (13) at each end respectively, the link (20) has the third hole (21) and the fourth hole (23) at each end respectively, a pair of crank mechanisms is to be a set, they are symmetrical; the joint shaft (30) combines with the second hole (13) of the crank (10) and the third hole (21) of the link (20), the bottom bracket shaft (40) combines with the first hole (11) of the crank (10), the fourth hole (23) of the link (20) combines with the connecting shaft (51) of the pedal (50); the crank mechanism is activated when pedaling force is applied to the pedal (50) to do reciprocation motion, as the link (20) which combines with the pedal (50) draws the crank (10) in a circular motion.

2. A crank mechanism according to claim 1, wherein the form of the crank (10) is a bar.

3. A crank mechanism according to claim 1, wherein the form of the link (20) is a bar.

4. A crank mechanism according to claim 1, wherein the distance between the first hole (11) and the second hole (13) at each end of the crank (10) is shorter than that between the third hole (21) and the fourth hole (23) at each end of the link (20).
